# FASCICULE DE BREVET EUROPEEN

(11) **EP 3 296 138 B1**
(45) Date de publication et mention de la délivrance du brevet: **18.08.2021**
(21) Numéro de dépôt: 17190854.4
(22) Date de dépôt: 13.09.2017
(51) Int. Cl.: B60K 37/00, B62D 25/14, B60H 1/00, B60R 13/02

(54) **MODULE AVANT DE VÉHICULE AUTOMOBILE COMPRENANT UNE PLANCHE DE BORD, UN PLASTRON ET UN SUPPORT-PLASTRON**
FRONTMODUL FÜR KRAFTFAHRZEUG, DAS EIN ARMATURENBRETT, EINE SCHUTZABDECKUNG UND EINE HALTERUNG FÜR DIE SCHUTZABDECKUNG UMFASST
FRONT MODULE OF A MOTOR VEHICLE COMPRISING A DASHBOARD, AN APRON AND AN APRON HOLDER

(30) Priorité: 19.09.2016 FR 1658768
(43) Date de publication de la demande: 21.03.2018
(73) Titulaire: RENAULT s.a.s., 92100 Boulogne-Billancourt (FR)
(72) Inventeur: COLLIN, Bastian, 78180 MONTIGNY-LE-BRETONNEUX (FR); DAGOREAU, Alain, 91419 DOURDAN (FR); DARGENT, Olivier, 94550 CHEVILLY LARUE (FR); CONFOLENT, Laurent, 92700 COLOMBES (FR); NIZAN, Christophe, 94240 L'HAY LES ROSES (FR)

(56) Documents cités:
- FR-A1- 2 917 054
- FR-A1- 2 946 947
- JP-A- H0 585 226

## Description

L'invention se rapporte au domaine de l'automobile et concerne précisément l'habitacle intérieur de véhicules et notamment du plastron de la planche de bord qui est une pièce d'aspect, de forme allongée, d'une largeur similaire à celle du véhicule, s'interposant entre le nez du corps de la planche de bord et le pare-brise, visible de l'extérieur et de l'intérieur notamment par le conducteur et le passager du premier rang du véhicule. L'invention trouve une application avantageuse sous la forme d'un module avant de véhicule automobile comprenant une planche de bord, un plastron et un support-plastron.

Un module avant de véhicule automobile comprenant une planche de bord, un plastron et un support-plastron est connu du document FR 2 946 947 A1.

Le plastron de planche de bord s'interpose entre le nez de la planche de bord et le pare-brise, il s'agit une pièce monobloc sans dispositif de fixation apparent puisque cette pièce a vocation à être une pièce d'aspect. Le plastron de planche de bord présente une forme allongée s'étirant sur toute la largeur du véhicule, l'arête avant du plastron étant de conformation galbée puisqu'elle est délimitée par le contour du pare-brise enveloppant le plastron. Le plastron de planche de bord contient également des aérations pour faire circuler sur le pare-brise l'air provenant du système de dégivrage. Le plastron de planche de bord est traditionnellement fixé à la planche de bord et solidarisé à la caisse au moyen d'agrafes ce qui permet de rattraper les jeux et de faciliter le montage. En usine, lors de la fabrication du véhicule, l'étape de montage du plastron de planche de bord sur la caisse se situe après le montage de la planche de bord et avant le montage du pare-brise. Les agrafes de solidarisation entre la caisse et le plastron sont intégrées à la caisse et doivent venir crocheter une poignée de la partie inférieure du plastron. Pour cela, les agrafes sont fixées à la caisse du véhicule de manière à ce que leur ouverture soit orientée vers l'arrière du véhicule, si bien qu'au montage il suffit de faire glisser le plastron jusqu'à ce que ses poignées disposées sur sa surface inférieure soient crochetées par les agrafes. Les agrafes doivent être alignées selon un axe perpendiculaire à la direction d'avancement du véhicule afin de pouvoir faire pivoter le plastron pour le retirer de l'étreinte des agrafes. En profondeur, le positionnement géométrique des agrafes de solidarisation du plastron à la caisse est contraint par le respect de normes de sécurité. En effet, la zone à proximité du pare-brise est impactable par la tête d'un piéton en cas de choc et ne doit donc pas comporter de telles agrafes. La ligne de positionnement des agrafes est donc reculée par rapport au pare-brise conformément au besoin sécuritaire évoqué. Lors du démontage en après-vente, pour accéder par exemple aux conduits de climatisation, le pare-brise est présent. Or, l'inclinaison et le rayon de courbure du pare-brise WS, combinés à la position des agrafes et à la longueur du plastron empêchent le pivotement du plastron pour le guider en dehors des agrafes. En effet, le pare-brise interfère avec le mouvement de pivotement du plastron nécessaire à son extraction puisqu'en soulevant l'arrière du plastron pour l'incliner on est aussitôt limité par le pare-brise qui vient au contact des extrémités du plastron.

Un des buts de l'invention est de remédier à au moins une partie des inconvénients de la technique antérieure en fournissant un support-plastron assurant la liaison mécanique avec le plastron, la planche de bord et la caisse et permettant un démontage facile du plastron et se démontant lui-même aisément de par son aptitude à pivoter sans interférer avec le pare-brise.

A cette fin, l'invention propose un module avant de véhicule automobile comprenant une planche de bord, des éléments de structure de la caisse du véhicule auxquels la planche de bord est fixée, un plastron formant un élément de surface sensiblement horizontale et allongée suivant la direction transversale du véhicule, le plastron étant disposé entre un nez avant de la planche de bord et un pare-brise du véhicule, caractérisé en ce qu'il comporte un support-plastron de dimensions réduites par rapport au plastron au moins suivant la direction transversale et/ou suivant la direction longitudinale du véhicule, ledit support-plastron étant une pièce de surface sensiblement horizontale, ledit support-plastron étant fixé audit plastron et à ladite planche de bord et solidarisé à la caisse dudit véhicule.

Grâce à l'invention, la solidarisation du plastron à la caisse du véhicule se fait au moyen du support-plastron.

Selon une caractéristique avantageuse, la largeur dudit support-plastron vaut sensiblement la moitié de la longueur dudit plastron. Cette caractéristique permet un positionnement facilité du support-plastron.

Selon une autre caractéristique avantageuse, la profondeur dudit support-plastron est inférieure à la profondeur dudit plastron. Cette caractéristique permet un montage et démontage facilité du support-plastron.

Selon une autre caractéristique avantageuse, ledit plastron est fixé au support-plastron au moyen d'au moins un clip métallo-plastique, ce qui permet une fixation rapide entre les deux éléments.

Selon une autre caractéristique avantageuse, ledit support-plastron est fixé à la planche de bord au moyen d'une vis et d'une attache et solidarisé à la caisse dudit véhicule au moyen d'une agrafe. L'avantage de cette caractéristique est l'utilisation de moyens de fixation couramment utilisés.

Selon une autre caractéristique avantageuse, ledit support-plastron comporte au moins une poignée apte à recevoir une agrafe.

Selon une autre caractéristique avantageuse, ledit support-plastron est fixé sensiblement dans une région centrale dudit plastron, ce qui permet une rotation du support-plastron et de l'agrafe qu'il comporte pour désolidariser le support-plastron de la caisse.

Selon une autre caractéristique avantageuse, ledit support-plastron est en plastique moulé, ce qui facilite une fabrication en série.

Selon une autre caractéristique avantageuse, ledit support-plastron est d'une largeur d'environ 80 cm, d'une profondeur maximum d'environ 30 cm dans la région centrale dudit support-plastron. Cette caractéristique permet un contact suffisant pour garantir la fixation des pièces tout en étant facilement démontable.

L'invention concerne un véhicule comportant un tel module avant de véhicule automobile. Ce véhicule présente des avantages analogues à ceux du module.

### BREVE DESCRIPTION DES FIGURES

D'autres caractéristiques et avantages apparaîtront à la lecture d'un mode de réalisation préféré mais non limitatif décrit en référence aux figures dans lesquelles:
- la figure 1 représente une vue en perspective de l'environnement véhicule d'un module avant selon l'invention ;
- la figure 2 est une vue en perspective sans le pare-brise de l'environnement véhicule d'un module avant selon l'invention ;
- la figure 3 représente une vue du dessous d'un module avant selon l'invention;
- la figure 4 est une vue du dessous de la planche de bord et d'un plastron conforme à l'invention ;
- la figure 5 est une vue du dessous du support-plastron du module avant conforme à l'invention ;
- la figure 6 est une vue latérale du support-plastron du module avant conforme à l'invention; et,
- la figure 7 est un agrandissement de la zone d'interface entre la planche de bord et le support-plastron, en vue de dessous, sans inclure le plastron.

Dans l'ensemble du texte les directions et orientations sont désignées en référence à un repère orthonormé direct XYZ classiquement utilisé en conception automobile, dans lequel X désigne la direction longitudinale du véhicule, dirigé vers l'arrière, Y est la direction transversale au véhicule, dirigé vers la droite et Z est la direction verticale dirigée vers le haut. Les notions « avant » et « arrière » sont indiquées en référence au sens de marche normal vers l'avant du véhicule. Dans l'ensemble de la description le terme « sensiblement » signifie qu'un léger écart peut être admis par rapport à une position ou orientation nominale déterminée, par exemple « sensiblement vertical » signifie qu'un écart de l'ordre de 10° par rapport à une orientation strictement verticale est admis dans le cadre de l'invention. Pour plus de clarté, les éléments identiques ou similaires sont repérés par des signes de référence identiques sur l'ensemble des figures.

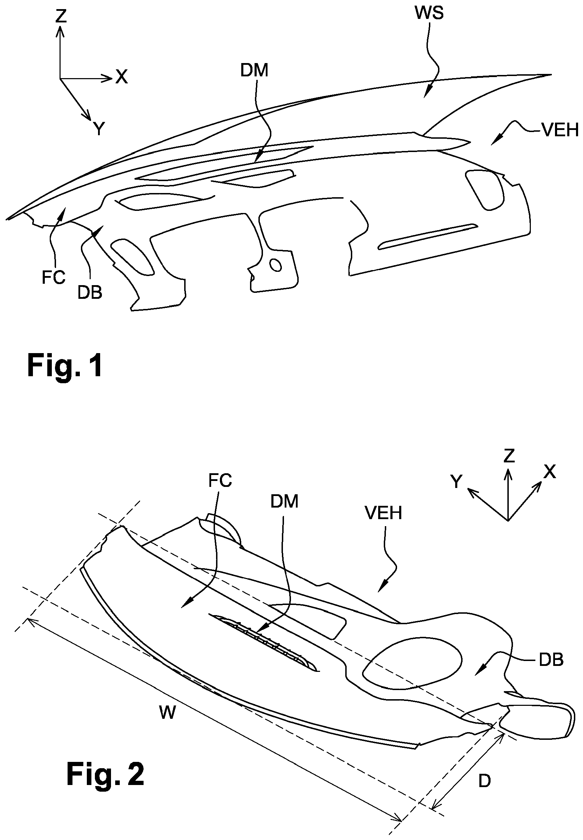

Sur la **figure 1** est représentée une vue en perspective de la zone avant d'un habitacle de véhicule VEH automobile, correspondant à l'environnement de l'invention. En lisant cette figure du bas vers le haut, on observe une planche de bord DB dont le nez, c'est-à-dire l'extrémité avant, par rapport au sens d'avancement du véhicule VEH, est prolongé par un plastron FC de planche de bord comportant des aérations de désembuage DM reliées par des conduits de désembuage à un système de climatisation. Le plastron FC a ensuite pour frontière le pare-brise WS fortement incliné, l'angle d'inclinaison étant d'environ 25° dans notre exemple. Le plastron FC est donc une pièce de surface sensiblement horizontale assurant la continuité visuelle entre le nez de la planche de bord DB et le pare-brise WS. Le plastron FC est donc une pièce monobloc délimitée à l'avant par le pare-brise WS ce qui donne une forme galbée à l'arrête avant du plastron FC et à l'arrière le plastron FC est délimité par la planche de bord DB. On note que la planche de bord DB et le plastron FC s'étendent sensiblement sur toute la largeur du véhicule suivant la direction transversale Y.

Sur la **figure 2** est représentée une autre vue de biais de la zone avant d'un habitacle de véhicule VEH automobile permettant de mieux illustrer la forme galbée de l'arrête avant du plastron FC et la forme relativement rectiligne de l'arrête arrière du plastron FC. La largeur W du plastron FC mesurée suivant la direction transversale Y est d'environ 150 cm. La profondeur D maximale du plastron FC considérée suivant la direction longitudinale X est atteinte en sa région centrale et mesure environ 40 cm. Le galbe de l'arrête avant du plastron FC correspond au rayon de courbure du pare-brise qui l'enveloppe, ce rayon mesurant environ 3,4 m dans notre exemple.

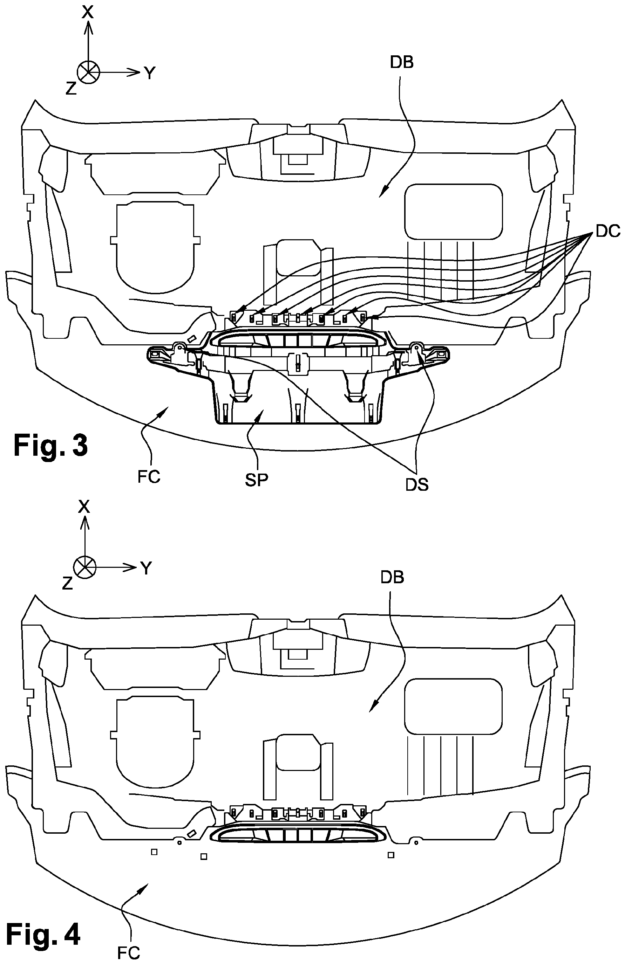

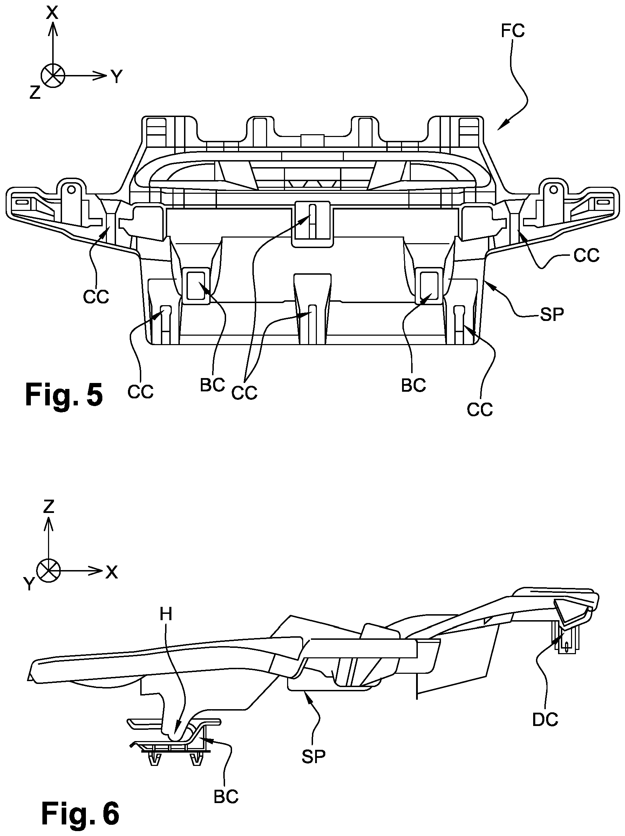

Sur la **figure 3** est représentée une vue du dessous d'une planche de bord DB, d'un plastron FC de planche de bord et d'un support-plastron SP. Ce support-plastron SP est une pièce de dimensions réduites par rapport au plastron FC de planche de bord, il a une largeur d'environ 80 cm, ce qui représente quasiment la moitié de la largeur du plastron FC, et une profondeur d'environ 30 cm. Le support-plastron SP est en plastique moulé ou en tout autre matériau ou mode de réalisation équivalent, en variante non illustrée le support plastron peut également être réalisé en impression 3D, thermoformage, etc. La face supérieure du support-plastron SP est fixée à la face inférieure du plastron FC. Les moyens de fixation du support-plastron SP au plastron FC sont détaillés en figure 5. Le côté du support-plastron SP bordant la planche de bord DB est fixé à la planche de bord DB au moyen de vis DS et d'attaches DC. La zone de fixation du support-plastron SP à la planche de bord DB apparaît plus clairement sur la figure 6.

La **figure 4** représente une vue du dessous du module avant selon l'invention sans le support-plastron de manière à mieux illustrer le recouvrement de la planche de bord DB par le plastron FC qui existe sur le module avant. Cette figure se regarde notamment en comparaison avec la figure 2.

Sur la **figure 5** est représenté un agrandissement du support-plastron SP seul de la figure précédente afin de mieux identifier les éléments de fixation du support-plastron SP au plastron FC au moyen de six clips métallo-plastique CC qui sont des moyens de fixation qui se clippent, et les moyens de solidarisation du support-plastron SP à la caisse que sont les deux agrafes BC alignées selon un axe perpendiculaire à la direction longitudinale X du véhicule VEH. On entend par caisse des éléments de structure du véhicule. Lors du montage on positionne donc en premier le support-plastron SP qui pivote facilement de par sa taille pour que les agrafes BC fixées à la caisse viennent crocheter les poignées inférieures du support-plastron SP comme l'illustre la figure suivante. La fixation du support-plastron SP à la planche de bord DB est alors réalisée au moyen des vis DS et attaches DC. Est ensuite glissé le plastron FC qui vient se clipper par appui sur les clips métallo-plastique CC. Lors du démontage, de minces pieds de biche sont utilisés pour déclipper le plastron FC de la planche de bord DB puis déclipper les clips métallo-plastique CC fixant le plastron FC au support-plastron SP. Enfin le support-plastron SP est pivoté pour venir se décrocheter de la caisse, le support-plastron SP pivotant facilement de par sa taille sans venir en interférence avec le pare-brise. Le pivotement permet en effet de déclipper les clips métallo-plastique CC qui sont orientés verticalement.

Sur la **figure 6** est représentée le support-plastron SP et une agrafe BC de solidarisation du support-plastron SP à la caisse. On peut noter que l'agrafe BC a été tournée de 180° par rapport à sa position traditionnelle pour faciliter le montage et le démontage du support-plastron SP, ce qui a été permis grâce à petite taille du support-plastron SP. En effet, les agrafes BC ont désormais une ouverture orientée vers l'avant du véhicule VEH. Ainsi, au montage on avance le support-plastron SP de manière à venir en avant des agrafes BC fixées à la caisse puis on recule le support-plastron SP pour que ses poignées H, disposées sur la surface inférieure du support-plastron SP, viennent se crocheter dans les agrafes BC. Enfin, on dispose le plastron FC sur le support-plastron SP comme précédemment décrit. Sur cette vue on voit également une attache DC verticale (d'autres agrafes étant cachées par celle-ci, alignées suivant l'axe Y horizontal et perpendiculaire à l'avancement au véhicule) assurant la fixation à la planche de bord (non représentée ici).

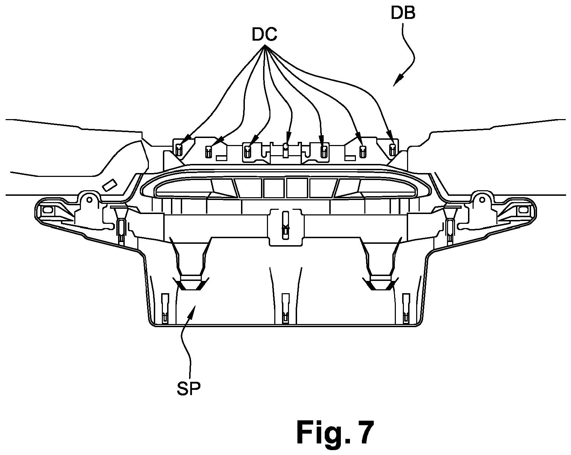

Sur la **figure 7** ne sont représentés en vue de dessous que le support-plastron SP et la planche de bord DB. En effet, le plastron n'a pas été ajouté afin d'illustrer plus clairement la fixation du plastron SP à la planche de bord DB. On voit ici que le côté du support-plastron SP bordant la planche de bord DB passe au-dessus de la planche de bord DB de manière à ce que les attaches DC verticales du support-plastron SP, illustrées sur la figure précédente, traversent des fentes réalisées à cet effet dans la planche de bord DB. Des clips métallo-plastique (non représentés ici) viennent ensuite coiffer l'extrémité libre de ces attaches DC pour bloquer leur mouvement, notamment leur mouvement relatif vertical par rapport à la planche de bord DB.

Enfin il convient de préciser que le plastron peut aussi être constitué de plusieurs éléments tels une façade supérieure esthétique souple et une pièce de structure mécanique rigide, ces éléments étant solidaires et sans degré de liberté entre eux.

## Revendications

1. Module avant de véhicule automobile comprenant une planche de bord, des éléments de structure de la caisse du véhicule auxquels la planche de bord est fixée, un plastron formant un élément de surface sensiblement horizontale et allongée suivant la direction transversale du véhicule, le plastron étant disposé entre un nez avant de la planche de bord et un pare-brise du véhicule, **caractérisé en ce qu'**il comporte un support-plastron (SP) de dimensions réduites par rapport au plastron (FC) au moins suivant la direction transversale (Y) et/ou suivant la direction longitudinale (X) du véhicule, ledit support-plastron (SP) étant une pièce de surface sensiblement horizontale, ledit support-plastron (SP) étant fixé directement audit plastron (FC) et à ladite planche de bord (DB) et solidarisé à la caisse dudit véhicule (VEH).

2. Module avant de véhicule automobile selon la revendication précédente **caractérisé en ce que** la largeur dudit support-plastron (SP) vaut sensiblement la moitié de la longueur dudit plastron (FC).

3. Module avant de véhicule automobile selon l'une quelconque des revendications précédentes **caractérisé en ce que** la profondeur dudit support-plastron (SP) est inférieure à la profondeur dudit plastron (FC).

4. Module avant de véhicule automobile selon l'une quelconque des revendications précédentes **caractérisé en ce que** ledit plastron (FC) est fixé au support-plastron (FC) au moyen d'au moins un clip métallo-plastique (CC).

5. Module avant de véhicule automobile selon l'une quelconque des revendications précédentes **caractérisé en ce que** ledit support-plastron (SP) est fixé à la planche de bord (DB) au moyen d'une vis (DS) et d'une attache (DC) et solidarisé à la caisse dudit véhicule (VEH) au moyen d'une agrafe (BC).

6. Module avant de véhicule automobile selon la revendication précédente **caractérisé en ce que** ledit support-plastron (SP) comporte au moins une poignée (H) apte à recevoir une agrafe (BC).

7. Module avant de véhicule automobile selon l'une quelconque des revendications précédentes **caractérisé en ce que** ledit support-plastron (SP) est fixé sensiblement dans une région centrale dudit plastron (FC).

8. Module avant de véhicule automobile selon l'une quelconque des revendications précédentes **caractérisé en ce que** ledit support-plastron (SP) est en plastique moulé.

9. Module avant de véhicule automobile selon l'une quelconque des revendications 7 ou 8 **caractérisé en ce que** ledit support-plastron (SP) est d'une largeur d'environ 80 cm, d'une profondeur maximum d'environ 30 cm

10. Véhicule (VEH) **caractérisé en ce qu'**il comporte un module avant de véhicule automobile selon l'une quelconque des revendications précédentes.

## Patentansprüche

1. Frontmodul eines Kraftfahrzeugs, welches ein Armaturenbrett, Strukturelemente der Karosserie des Fahrzeugs, an denen das Armaturenbrett befestigt ist, und eine Schutzabdeckung, die ein Element mit im Wesentlichen horizontaler und in der Querrichtung des Fahrzeugs lang gestreckter Oberfläche bildet, umfasst, wobei die Schutzabdeckung zwischen einem vorderen Ende des Armaturenbretts und einer Windschutzscheibe des Fahrzeugs angeordnet ist, **dadurch gekennzeichnet, dass** es eine Halterung für die Schutzabdeckung (SP) mit Abmessungen, die gegenüber der Schutzabdeckung (FC) wenigstens in der Querrichtung (Y) und/oder in der Längsrichtung (X) des Fahrzeugs verringert sind, aufweist, wobei die Halterung für die Schutzabdeckung (SP) ein Teil mit im Wesentlichen horizontaler Oberfläche ist, wobei die Halterung für die Schutzabdeckung (SP) direkt an der Schutzabdeckung (FC) und am Armaturenbrett (DB) befestigt und mit der Karosserie des Fahrzeugs (VEH) fest verbunden ist.

2. Frontmodul eines Kraftfahrzeugs nach dem vorhergehenden Anspruch, **dadurch gekennzeichnet, dass** die Breite der Halterung für die Schutzabdeckung (SP) im Wesentlichen die Hälfte der Länge der Schutzabdeckung (FC) beträgt.

3. Frontmodul eines Kraftfahrzeugs nach einem der vorhergehenden Ansprüche, **dadurch gekennzeichnet, dass** die Tiefe der Halterung für die Schutzabdeckung (SP) kleiner als die Tiefe der Schutzabdeckung (FC) ist.

4. Frontmodul eines Kraftfahrzeugs nach einem der vorhergehenden Ansprüche, **dadurch gekennzeichnet, dass** die Schutzabdeckung (FC) an der Halterung für die Schutzabdeckung (FC) mittels wenigstens eines Metall-Kunststoff-Clips (CC) befestigt ist.

5. Frontmodul eines Kraftfahrzeugs nach einem der vorhergehenden Ansprüche, **dadurch gekennzeichnet, dass** die Halterung für die Schutzabdeckung (SP) am Armaturenbrett (DB) mittels einer Schraube (DS) und eines Verbindungselements (DC) befestigt ist und mit der Karosserie des Fahrzeugs (VEH) mittels einer Klammer (BC) fest verbunden ist.

6. Frontmodul eines Kraftfahrzeugs nach dem vorhergehenden Anspruch, **dadurch gekennzeichnet, dass** die Halterung für die Schutzabdeckung (SP) wenigstens einen Griff (H) aufweist, der geeignet ist, eine Klammer (BC) aufzunehmen.

7. Frontmodul eines Kraftfahrzeugs nach einem der vorhergehenden Ansprüche, **dadurch gekennzeichnet, dass** die Halterung für die Schutzabdeckung (SP) im Wesentlichen in einem mittleren Bereich der Schutzabdeckung (FC) befestigt ist.

8. Frontmodul eines Kraftfahrzeugs nach einem der vorhergehenden Ansprüche, **dadurch gekennzeichnet, dass** die Halterung für die Schutzabdeckung (SP) aus geformtem Kunststoff besteht.

9. Frontmodul eines Kraftfahrzeugs nach einem der Ansprüche 7 oder 8, **dadurch gekennzeichnet, dass** die Halterung für die Schutzabdeckung (SP) eine Breite von ungefähr 80 cm und eine maximale Tiefe von ungefähr 30 cm aufweist.

10. Kraftfahrzeug (VEH), **dadurch gekennzeichnet, dass** es ein Frontmodul eines Kraftfahrzeugs nach einem der vorhergehenden Ansprüche aufweist.

## Claims

1. Motor vehicle front module comprising a dashboard, structural elements of the bodyshell of the vehicle to which elements the dashboard is fixed, an apron forming an element with a substantially horizontal surface which is elongate in the transverse direction of the vehicle, the apron being positioned between a front tip of the dashboard and a windscreen of the vehicle, **characterized in that** it comprises an apron support (SP) the dimensions of which are reduced in comparison with the apron (FC) at least in the transverse direction (Y) and/or in the longitudinal direction (X) of the vehicle, said apron support (SP) being a component with a substantially horizontal surface, said apron support (SP) being fixed directly to said apron (FC) and to said dashboard (DB) and secured to the bodyshell of said vehicle (VEH).

2. Motor vehicle front module according to the preceding claim, **characterized in that** the width of said apron support (SP) is substantially equivalent to half the length of said apron (FC).

3. Motor vehicle front module according to either one of the preceding claims, **characterized in that** the depth of said apron support (SP) is less than the depth of said apron (FC).

4. Motor vehicle front module according to any one of the preceding claims, **characterized in that** said apron (FC) is fixed to the apron support (FC) by means of at least one metal-plastic clip (CC).

5. Motor vehicle front module according to any one of the preceding claims, **characterized in that** said apron support (SP) is fixed to the dashboard (DB) by means of a screw (DS) and of a connector (DC) and secured to the bodyshell of said vehicle (VEH) by means of a fastener (BC) .

6. Motor vehicle front module according to the preceding claim, **characterized in that** said apron support (SP) comprises at least one handle (H) able to accept a fastener (BC).

7. Motor vehicle front module according to any one of the preceding claims, **characterized in that** said apron support (SP) is fixed substantially in a central region of said apron (FC).

8. Motor vehicle front module according to any one of the preceding claims, **characterized in that** said apron support (SP) is made of moulded plastic.

9. Motor vehicle front module according to either one of Claims 7 and 8, **characterized in that** said apron support (SP) has a width of approximately 80 cm, and a maximum depth of approximately 30 cm.

10. Vehicle (VEH), **characterized in that** it comprises a motor vehicle front module according to any one of the preceding claims.
